# EUROPEAN PATENT APPLICATION

(11) **EP 4 670 576 A1**
(43) Date of publication of application: **31.12.2025**
(21) Application number: 25185329.7
(22) Date of filing: 25.06.2025
(51) Int. Cl.: A47C 23/00, A47C 27/06

(54) **STRUCTURE OF INVERTED-SPRING MODULE AND SPRING NET**

(30) Priority: 26.06.2024 CN 202410832282
(71) Applicant: New-Tec Integration (Xiamen) Co., Ltd., Xiamen, Fujian 361100 (CN)
(72) Inventor: LENG, Luhao, Xiamen 361100 (CN)
(74) Representative: Verscht, Thomas Kurt Albert

(57) **Abstract**

The present disclosure provides a structure of an inverted-spring module, the spring module comprises a base having assemblability and spring members; the assemblability is that assemblability between bases and between the base and the spring members; the base comprises position-limiting cavities, the position-limiting cavities comprise cavity bodies, and shapes of the cavity bodies are adapted to ends of the spring members configured to be assembled to the base; and the cavity bodies are sleeved over the ends of the spring members configured to be assembled to the base; after the spring members are assembled, the position-limiting cavities limit heights of the spring members, heights of the position-limiting cavities are no more than 1/3 of the heights of the spring members, the spring members are inserted into the position-limiting cavities by setting the position-limiting cavities on the base, and the position-limiting cavities are used to enhance connection and support between the base and the spring members, increase a connection strength between the spring members and the base, and improve stability of the spring members.

## Description

### RELATED APPLICATIONS

This application claims priority to Chinese patent application number 202410832282.5, filed on June 26, 2024. Chinese patent application number 202410832282.5 is incorporated herein by reference.

### FIELD OF THE DISCLOSURE

The present disclosure relates to the technical field of household springs, and in particular relates to a structure of an inverted-spring module and a spring net.

### BACKGROUND OF THE DISCLOSURE

Household springs are commonly used in furniture, mattresses, chairs, seats, sofas, and other equipment to provide elastic support, shock absorption, and cushioning so as to increase comfort and durability of use. Needed types and shapes of springs will vary for various home equipment.

The household springs have relatively high elasticities and are configured to support various home equipment, providing good cushioning and elastic support. The household springs provide support through elastic deformation and rebound, and the support is one of the important functions of the springs.

It is known that when household springs are assembled together, a base is required for placing and assembling the springs, the existing base provides a space for placing the springs, the assembled springs are connected and fixed using third connecting members, and this enhances stability of the springs when deformed by stress. However, as stability maintenance merely relies on the third connecting member between the assembled springs, the base has weak connection and support, easily leading to a separation of the base and the springs during use and causing abnormal displacement of the springs, this results in unstable deformation of the springs, and cushioning and elastic support strength will be reduced, thereby affecting comfort of use.

### BRIEF SUMMARY OF THE DISCLOSURE

The technical problem in the existing technologies to be addressed by the present disclosure is that weak connection and support exists between spring members and a base when the spring members assembled, which leads to unstable deformation of the spring members, a structure of an inverted-spring module is therefore provided, and an assembly enhances the connection between the spring members and the base to improve a stability of the spring members.

In order to solve the aforementioned technical problems, the present disclosure provides a structure of an inverted-spring module, characterized in that: the spring module comprises a base having assemblability and spring members; the assemblability is that assemblability between bases (e.g., the base and other base) and between the base and the spring members; adjacent ones of the spring members form an independent arrangement, and the independent arrangement is that the spring members are not connected together;

The base comprises position-limiting cavities, the position-limiting cavities comprise cavity bodies for accommodating the spring members, and shapes of the cavity bodies are adapted to ends of the spring members configured to be assembled to the base; and the cavity bodies and the spring members are connected via detachable connection members;

After the spring members are assembled, the position-limiting cavities limit heights of the spring members, and heights of the position-limiting cavities are no more than 1/3 of the heights of the spring members;

The position-limiting cavities are partially or fully connected to the base to form detachable connections, the base has a plate-type structure, and the position-limiting cavities are structures protruding from an upper surface of the base.

In a preferred embodiment, the spring members are tapered spring members, a middle portion of a spring member comprises a first tapered cavity, and the first tapered cavity is used for stacking another spring member.

In a preferred embodiment,the spring members comprise tapered spring sleeves and tapered springs; and the tapered springs are assembled inside the tapered spring sleeves.

In a preferred embodiment, the position-limiting cavities comprise fixed portions and elastic portions, and the fixed portions are fixed to the base;

The elastic portions are disposed inside the fixed portions and are configured to detach relative to the fixed portions.

In a preferred embodiment, the fixed portions are detachably fixed to the base or the fixed portions are integrated with the base.

In a preferred embodiment, openings of the fixed portions face upward to form the cavity bodies, the openings of the fixed portions face downward to form annular buckling grooves, and the elastic portions are disposed inside the annular buckling grooves.

In a preferred embodiment, the elastic portions are springs.

In a preferred embodiment, a position-limiting cavity comprises at least four position-limiting portions, and the at least four position-limiting portions are disposed at equal intervals along a circumferential direction;

A cavity body is enclosed by the at least four position-limiting portions.

In a preferred embodiment, the position-limiting cavities are independent components, and the position-limiting cavities are detachably assembled to the base.

In a preferred embodiment, the position-limiting cavities are detachably connected to the base via buckling structures or third members.

In a preferred embodiment, the base comprises annular grooves, at least two elastic buckling members are disposed along an edge an annular groove, and bottoms of the position-limiting cavities comprise annular concave grooves;

The position-limiting cavities are downwardly pressed into the annular grooves, and an annular concave groove is buckled to the at least two elastic buckling members.

In a preferred embodiment, an elastic buckling member comprises a protruding portion and a pressing portion, the protruding portion is buckled in the annular concave groove, and the pressing portion is pressed downward to enable the protruding portion to be separated from the annular concave groove, thereby removing a position-limiting cavity.

In a preferred embodiment, first insertion pins are disposed on the base, the bottoms of the position-limiting cavities comprise first insertion holes, and the first insertion pins are disposed in the first insertion holes.

In a preferred embodiment, the position-limiting cavities comprise springs and spring sleeves, and the springs are assembled inside the spring sleeves.

In a preferred embodiment, the base is stackable.

In a preferred embodiment, the position-limiting cavities are stackable.

In a preferred embodiment, the base comprises multiple of the position-limiting cavities.

In a preferred embodiment, the position-limiting cavities are arranged in an array; and the position-limiting cavities are disposed on the base in at least one row.

In a preferred embodiment, second insertion pins are disposed on inner sides of the cavity bodies of the position-limiting cavities, and ends of the spring members used for assembling to the base comprise second insertion holes; and the second insertion pins are disposed in the second insertion holes to form the detachable connection members.

The present disclosure further discloses a spring net, it comprises the structure of the inverted-spring module according to any one or more of claims 1-19, and the spring net is assembled by the bases and the spring members;
The bases are assembled together and the spring members are assembled to the bases to define the spring net.

In a preferred embodiment, the spring members are tapered spring members, the position-limiting cavities are tapered cavities, and cavity bodies of the position-limiting cavities are configured to be tapered holes;
Small ends of tapered shapes of the tapered spring members are assembled inside the tapered holes.

Compared with the existing techniques, the technical solution has the following advantages.
1. The spring members are inserted into the position-limiting cavities by setting the position-limiting cavities on the base, and the position-limiting cavities are used to enhance connection and support between the base and the spring members, increase a connection strength between the spring members and the base, and improve stability of the spring members.
2. The spring members are positioned by setting the position-limiting cavities with a preset height on the base, when the spring members are downwardly deformed under a bearing capacity, the position-limiting cavities can stabilize deformations of the spring members and ensure that deformations of individual ones of the spring members are prevented from interfering with each other.
3. Downward deformation of the spring members is restricted in a height direction by setting the position-limiting cavities with the preset height, thereby increasing hardnesses of the spring members by a certain extent, and the hardnesses of the spring members can also be adjusted by adjusting the height of the position-limiting cavities.

### BRIEF DESCRIPTION OF THE DRAWINGS

FIG. 1 illustrates a view of a structure of an inverted-spring module in a preferred embodiment 1 of the present disclosure;
FIG. 2 illustrates an assembly diagram of a spring member and a base in the preferred embodiment 1 of the present disclosure;
FIG. 3 illustrates a structural view of the base with a position-limiting cavity in the preferred embodiment 1 of the present disclosure;
FIG. 4 illustrates a view of multiple bases that are being stacked in the preferred embodiment 1 of the present disclosure;
FIG. 5 illustrates a view of the bases that are stacked in the preferred embodiment 1 of the present disclosure;
FIG. 6 illustrates a structural view of a spring that is assembled to the position-limiting cavity on the base in the preferred embodiment 1 of the present disclosure;
FIG. 7 illustrates a structural view of a tapered spring member and a second insertion hole of a bottom thereof in the preferred embodiment 1 of the present disclosure;
FIG. 8 illustrates a view of tapered spring members that are stacked in the preferred embodiment 1 of the present disclosure;
FIG. 9 illustrates an assembly diagram of the multiple bases in the preferred embodiment 1 of the present disclosure;
FIG. 10 illustrates an assembly diagram of spring members in the preferred embodiment 1 of the present disclosure after the bases are assembled;
FIG. 11 illustrates a structural view of a spring net in the preferred embodiment 1 of the present disclosure;
FIG. 12 illustrates a view of a structure of an inverted-spring module in a preferred embodiment 2 of the present disclosure;
FIG. 13 illustrates a structural view of a base with position-limiting cavities in the preferred embodiment 2 of the present disclosure;
FIG. 14 illustrates a view of bases that are stacked in the preferred embodiment 2 of the present disclosure;
FIG. 15 illustrates a structural view of spring members that are assembled inverted to the position-limiting cavities on the base in the preferred embodiment 2 of the present disclosure;
FIG. 16 illustrates an assembly diagram of multiple inverted-spring modules in the preferred embodiment 2 of the present disclosure;
FIG. 17 illustrates an assembly diagram of the multiple bases in the preferred embodiment 2 of the present disclosure;
FIG. 18 illustrates an assembly diagram of the spring members in the preferred embodiment 2 of the present disclosure after the bases are assembled;
FIG. 19 illustrates a structural view of a spring net in the preferred embodiment 2 of the present disclosure;
FIG. 20 illustrates a view of a structure of an inverted-spring module in a preferred embodiment 3 of the present disclosure;
FIG. 21 illustrates a structural view of spring members that are assembled inverted to position-limiting cavities on a base in the preferred embodiment 3 of the present disclosure;
FIG. 22 illustrates a structural view of the position-limiting cavities that are assembled to the base in the preferred embodiment 3 of the present disclosure;
FIG. 23 illustrates a structural view of the base with an elastic buckling member in the preferred embodiment 3 of the present disclosure;
FIG. 24 illustrates a view of bases that are stacked in the preferred embodiment 3 of the present disclosure;
FIG. 25 illustrates a view of tapered spring members that are stacked in the preferred embodiment 3 of the present disclosure;
FIG. 26 illustrates a view of position-limiting cavities that are stacked using tapered spring sleeves in the preferred embodiment 3 of the present disclosure;
FIG. 27 illustrates a first assembly diagram of the bases, the position-limiting cavities, and the spring members in the preferred embodiment 3 of the present disclosure;
FIG. 28 illustrates a second assembly diagram of the bases, the position-limiting cavities, and the spring members in the preferred embodiment 3 of the present disclosure; and
FIG. 29 illustrates a structural view of a spring net in the preferred embodiment 3 of the present disclosure.

Reference numbers in the accompanying drawings: base 1; annular groove 11; elastic buckling member 12; protruding portion 121; pressing portion 122; first insertion pin 13; spring member 2; tapered spring sleeve 21; tapered spring 22; second insertion hole 23; position-limiting cavity 3; cavity body 31; second insertion pin 311; fixed portion 32; elastic portion 33; position-limiting portion 34; annular concave groove 35; first insertion hole 36; spring 37; elastic sleeve 38 (i.e., spring sleeves 38); and spring net 4.

### DETAILED DESCRIPTION OF THE EMBODIMENTS

The technical solutions of the embodiments of the present disclosure will be clearly and completely described below in combination with the drawings of the embodiments of the present disclosure; and it should be obvious that the embodiments described are merely some of the embodiments of the present disclosure instead of all embodiments, and all other embodiments fall into the protection scope of the present disclosure provided that they are obtained by a person of skill in the art based on the embodiments of the present disclosure without creative works.

In the description of the present disclosure, it should be noted that terms, such as "upper", "lower", "inner", "outer", and "top/bottom", refer to orientations or positional relationships based on the orientations and the positional relationships shown in the drawings, are merely used for convenience in describing the present disclosure and simplifying the description, rather than indicating or implying that the device or the element should have a specified orientation or should be constructed or operated in a specified orientation, and should not be interpreted as a limitation of the present disclosure. Additionally, the terms "first" and "second" are merely used for descriptive purposes and should not be understood to indicate or imply relative importance.

In the description of the present disclosure, unless otherwise clearly stated or limited, it should be noted that terms, such as "installed", "disposed", "mounted/sleeved", and "connected", should develop broad understandings, for example, "connected" can refer to a wall-mounted connection, a detachable connection, an integrated connection, a mechanical connection, an electrical connection, a direct connection, an indirect connection through an intermediate medium, or an internal communication between two components, and the specified meaning of the terms in the present disclosure can be understood by those of skill in the art based on the specified conditions.

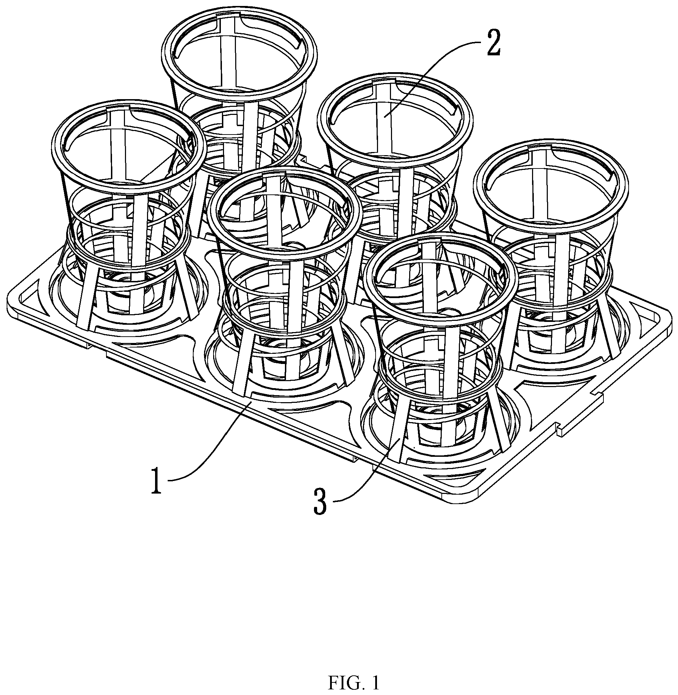

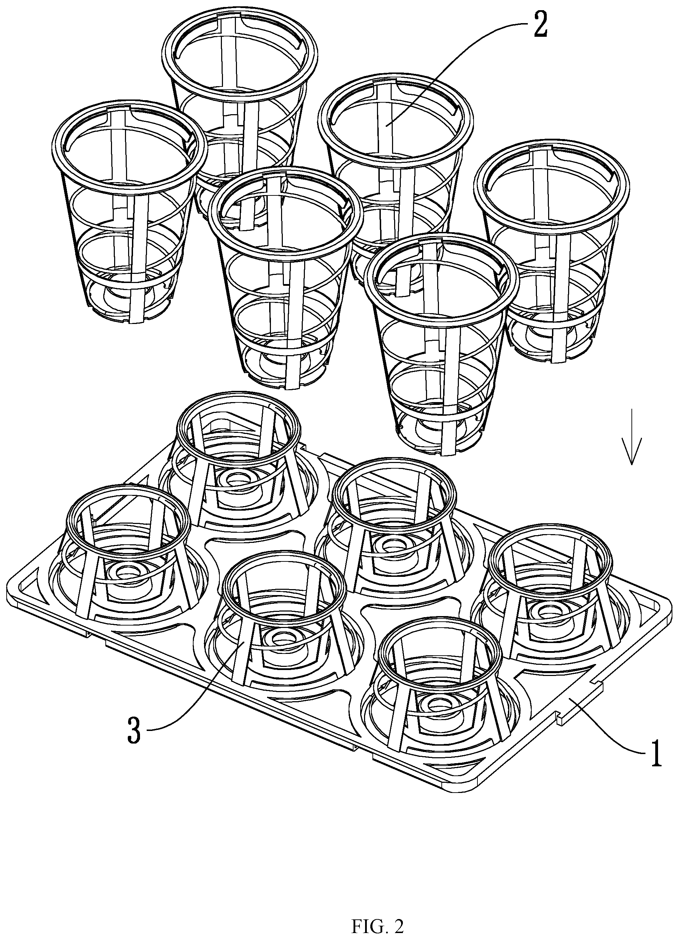

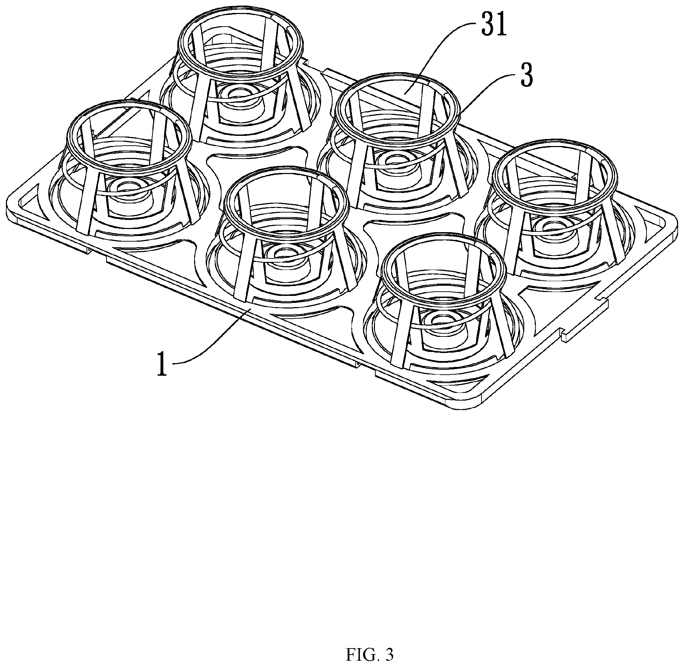

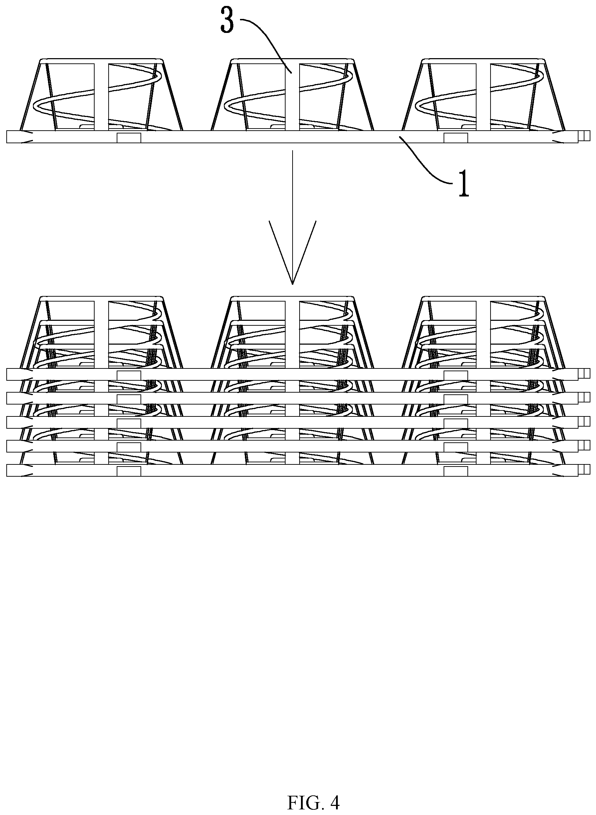

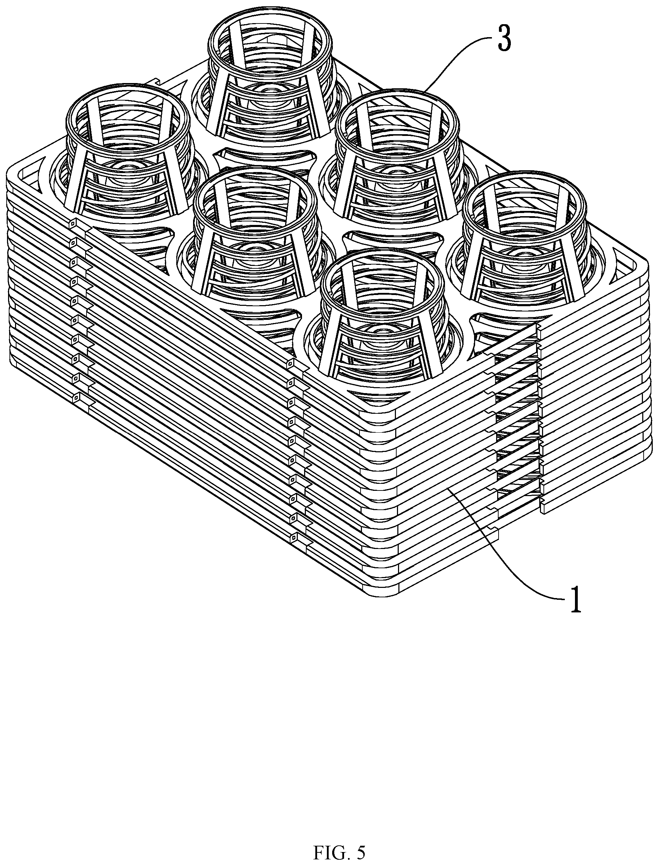

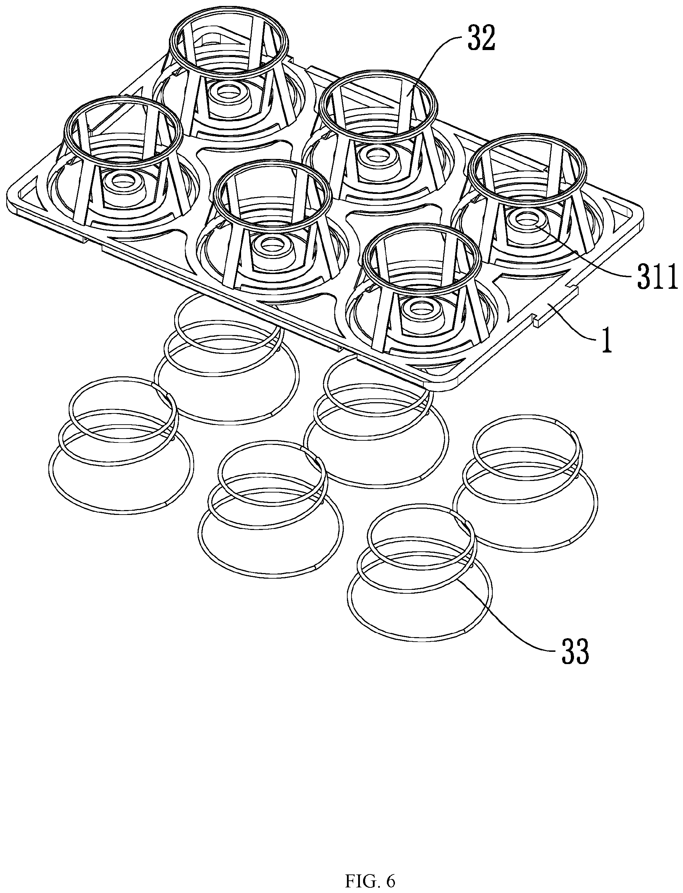

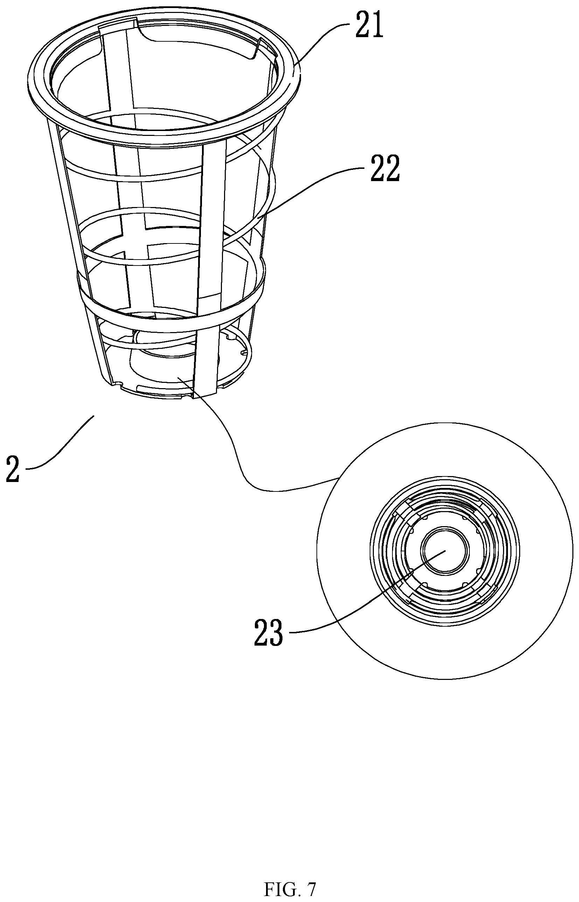

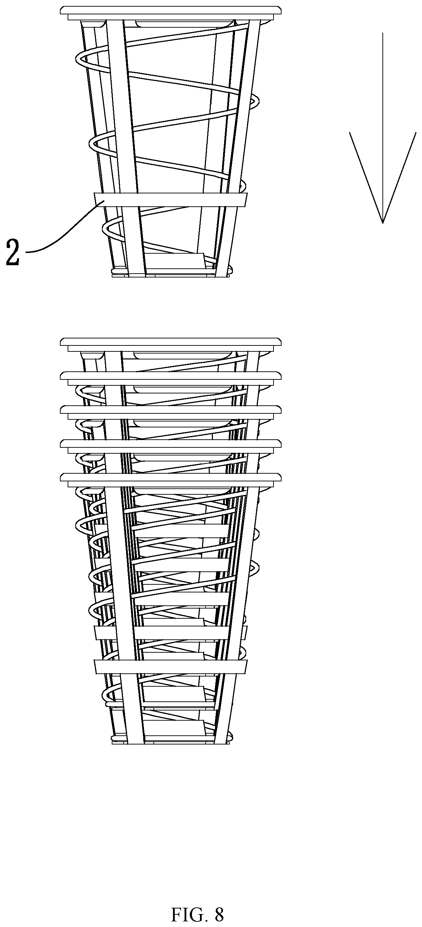

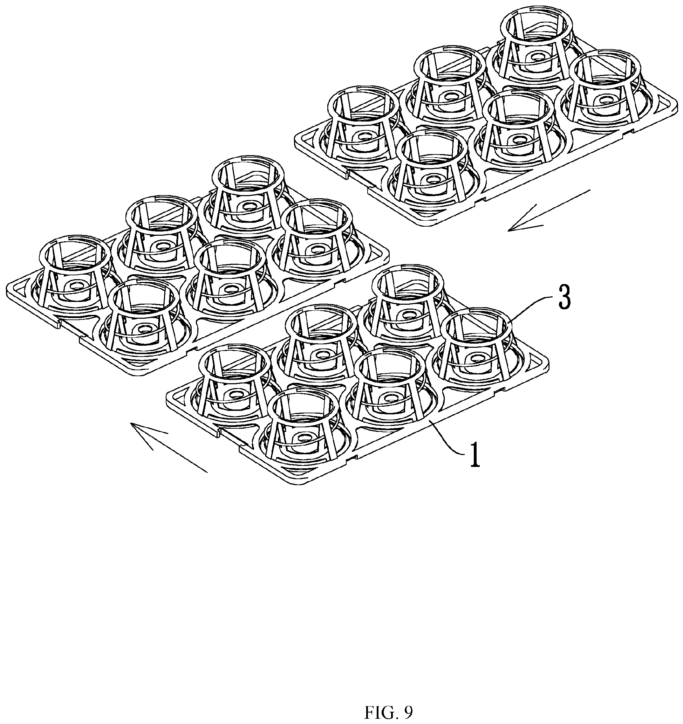

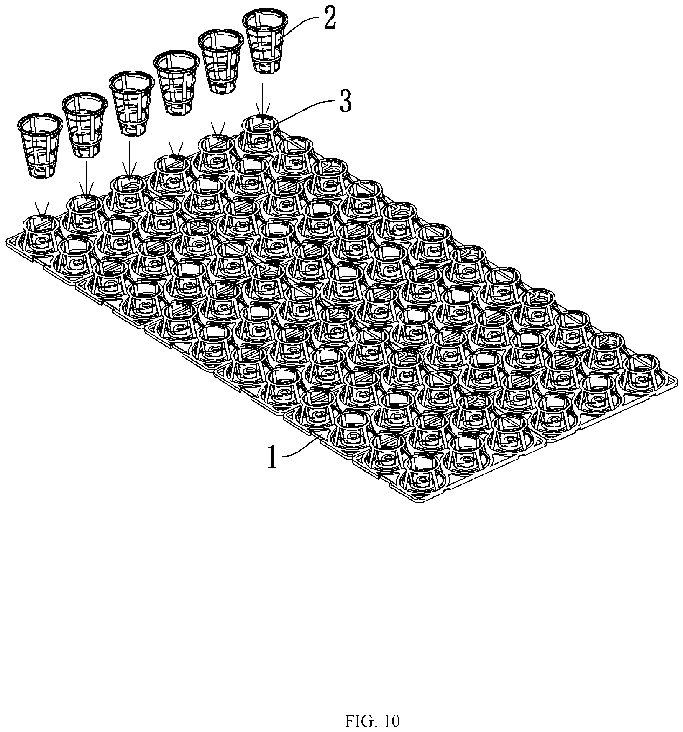

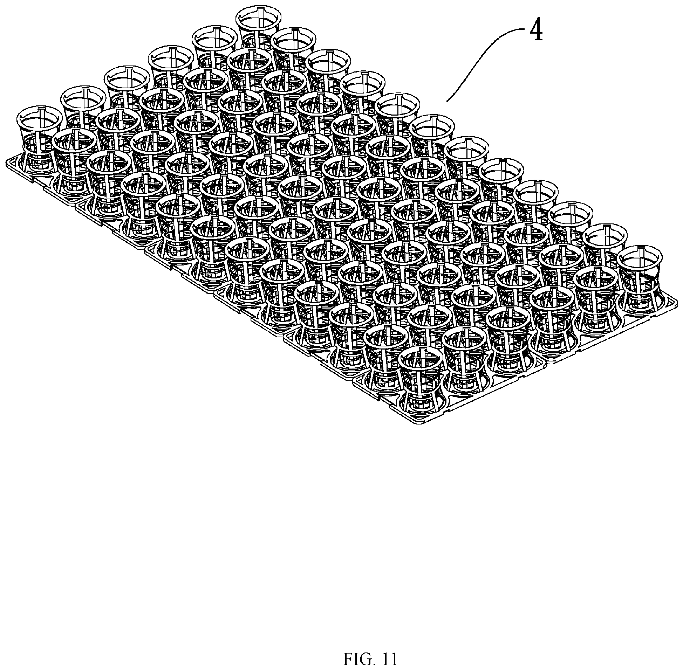

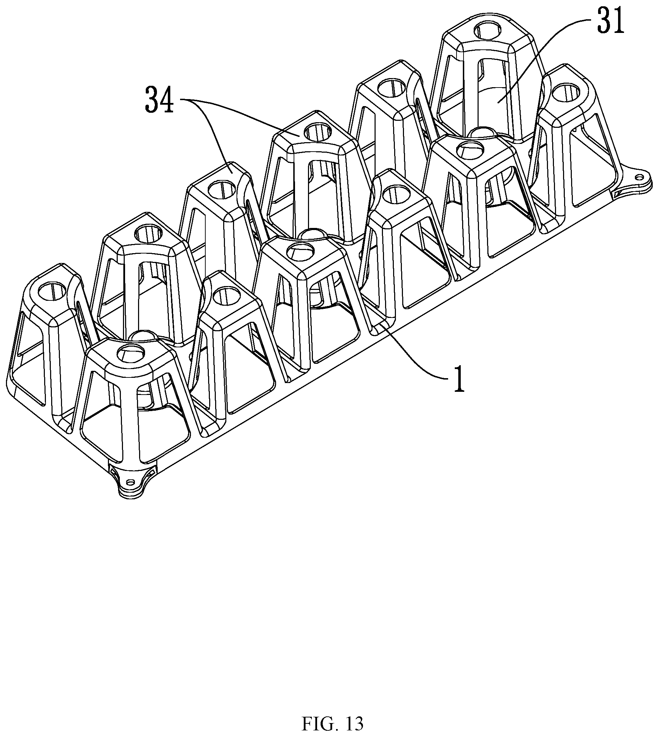

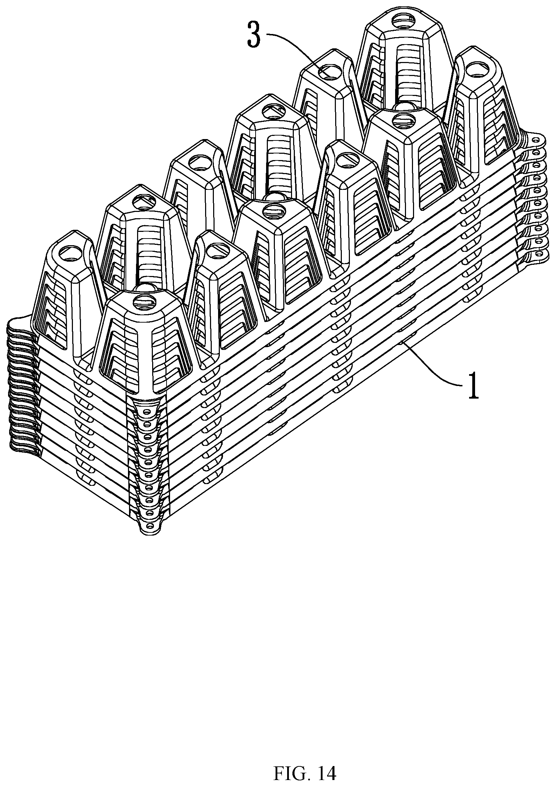

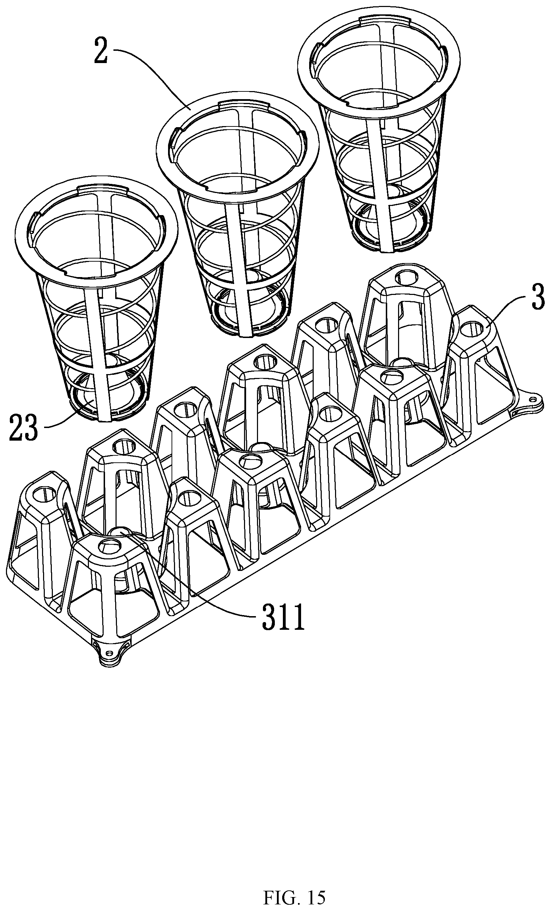

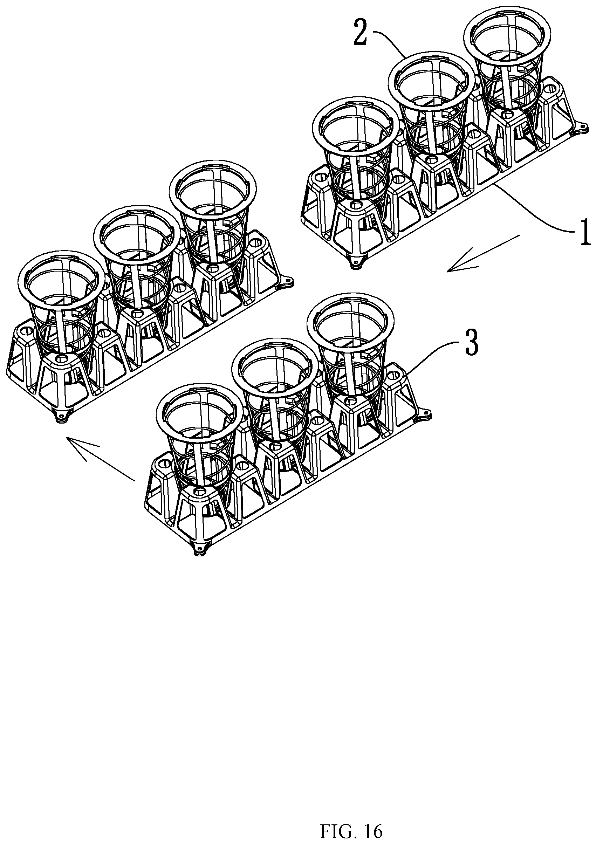

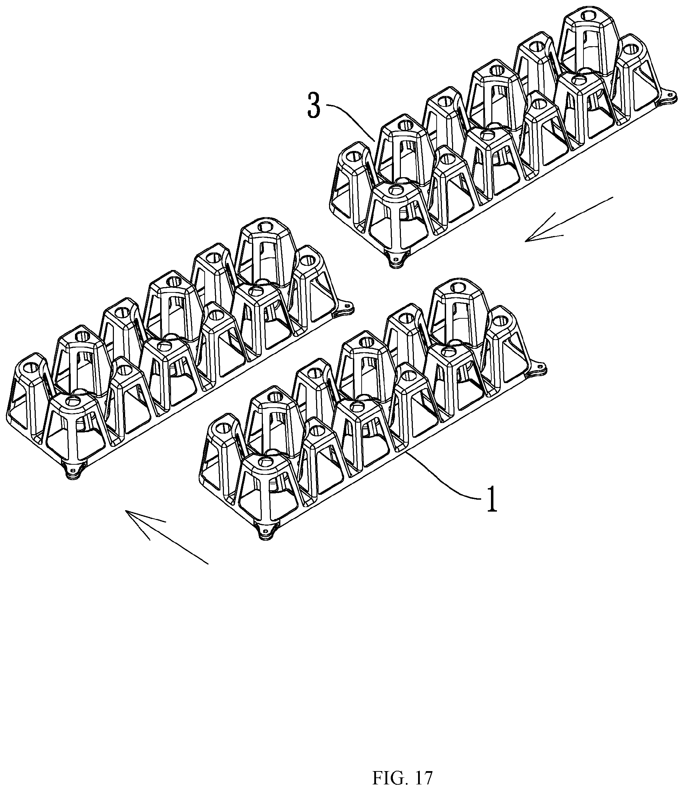

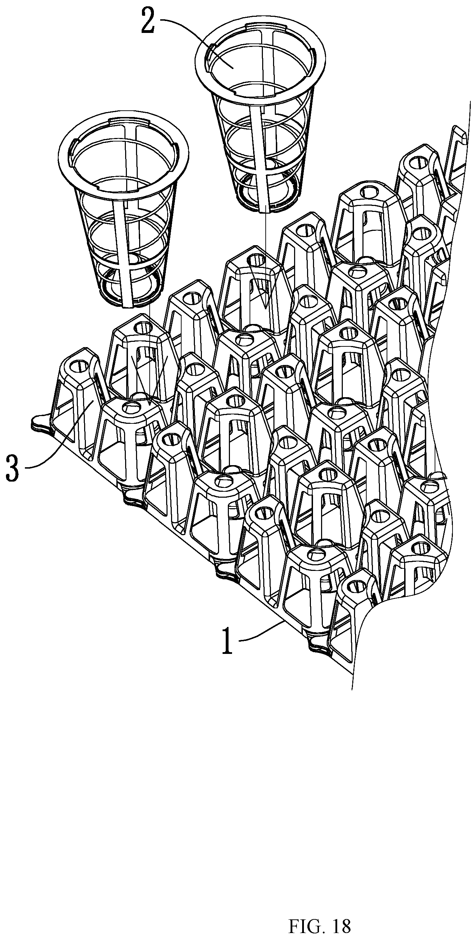

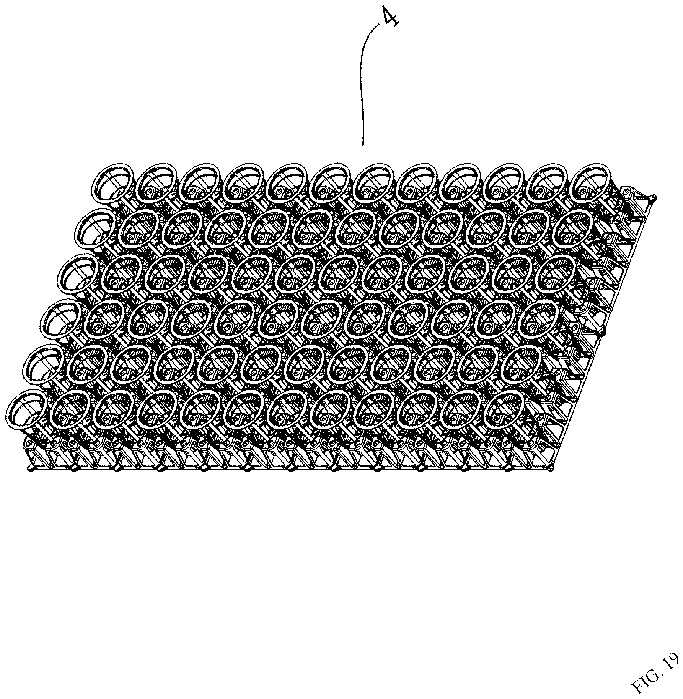

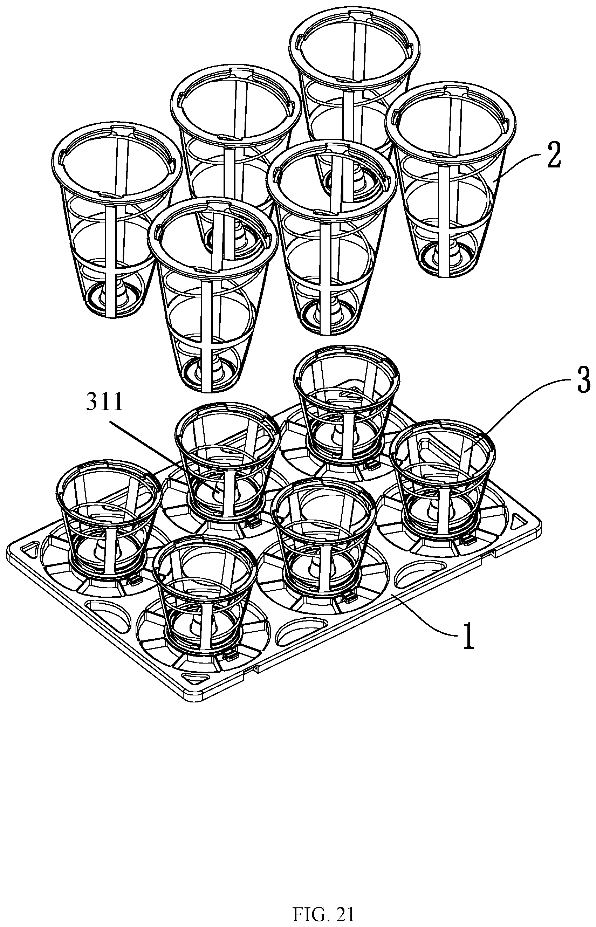

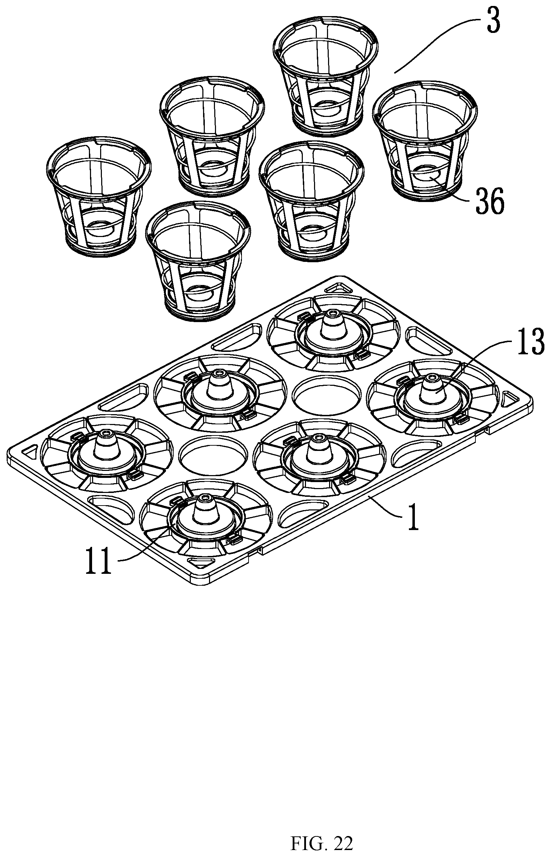

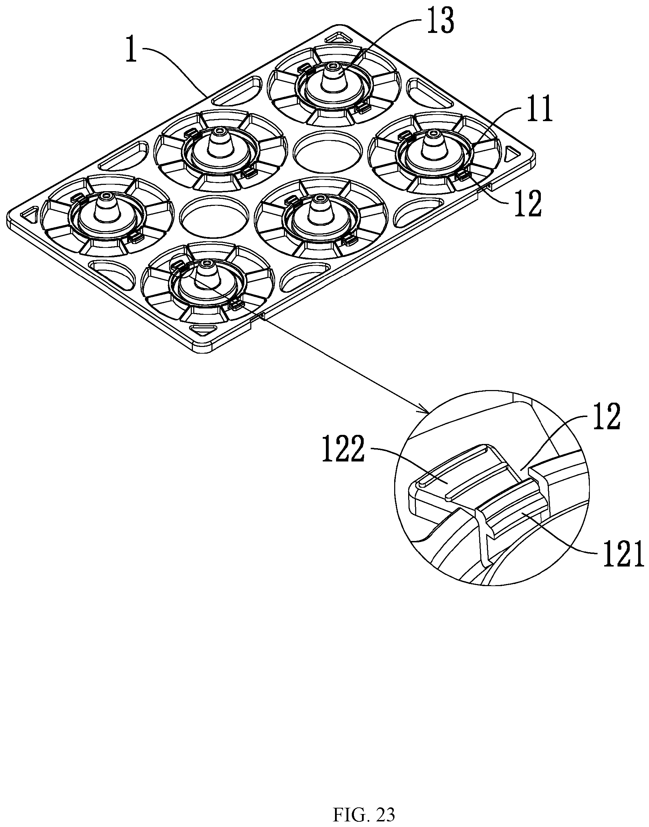

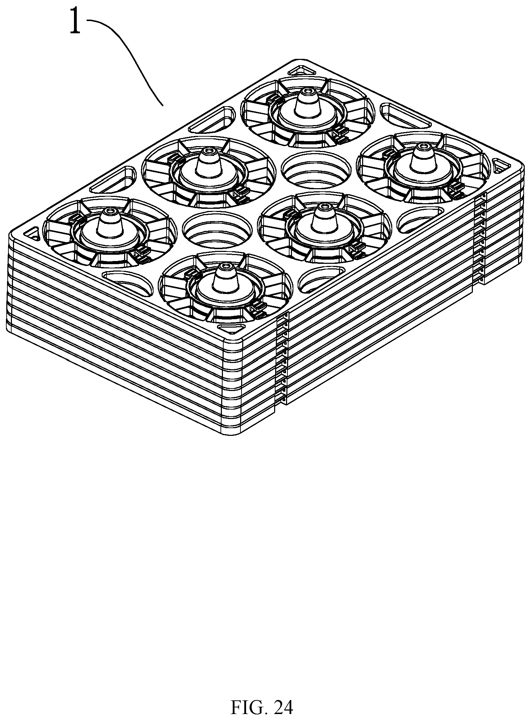

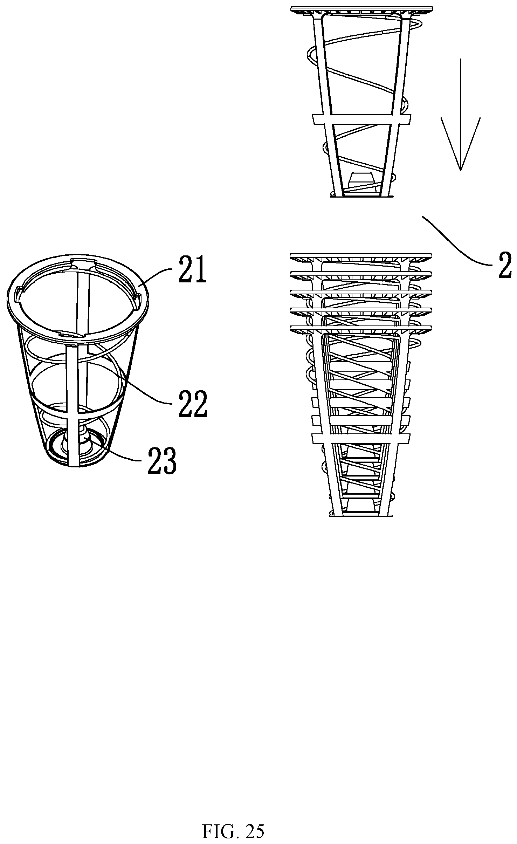

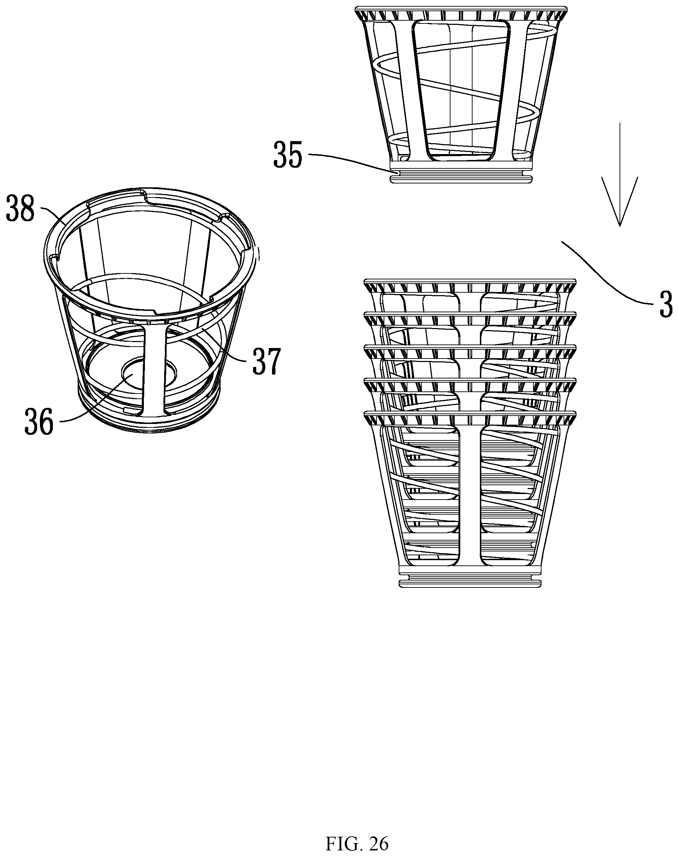

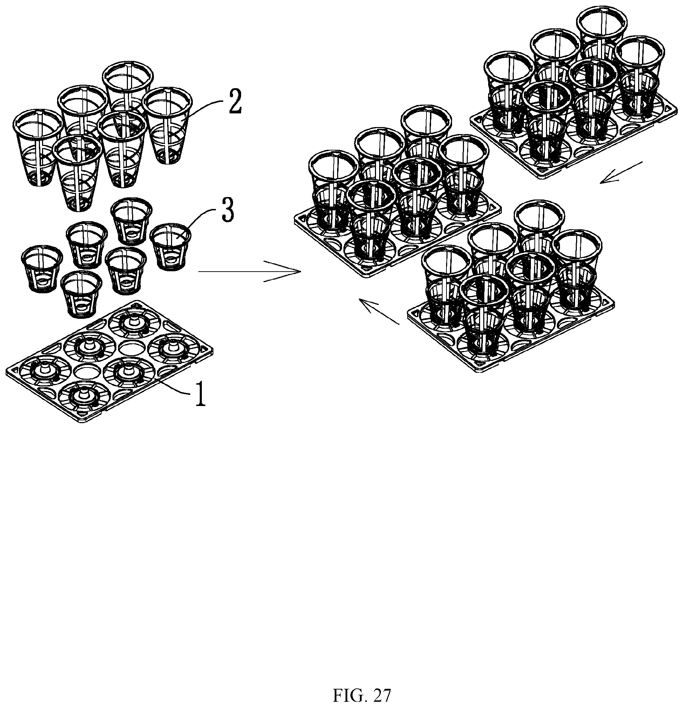

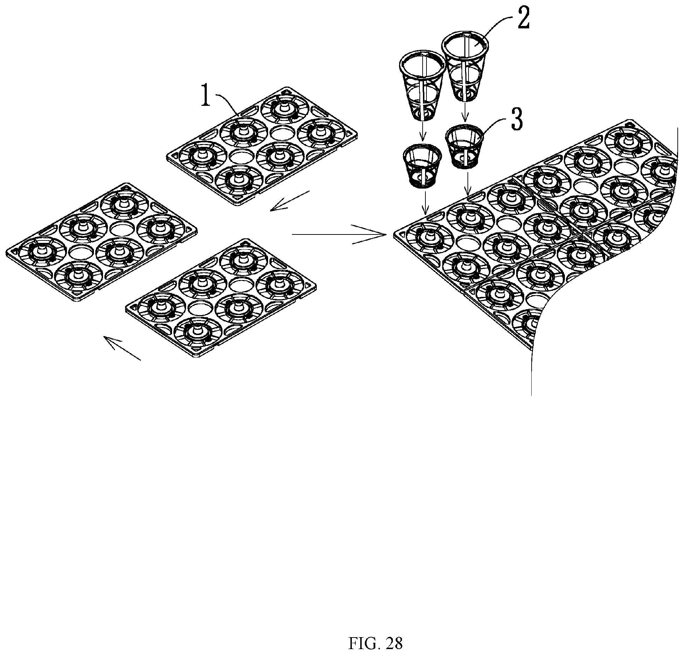

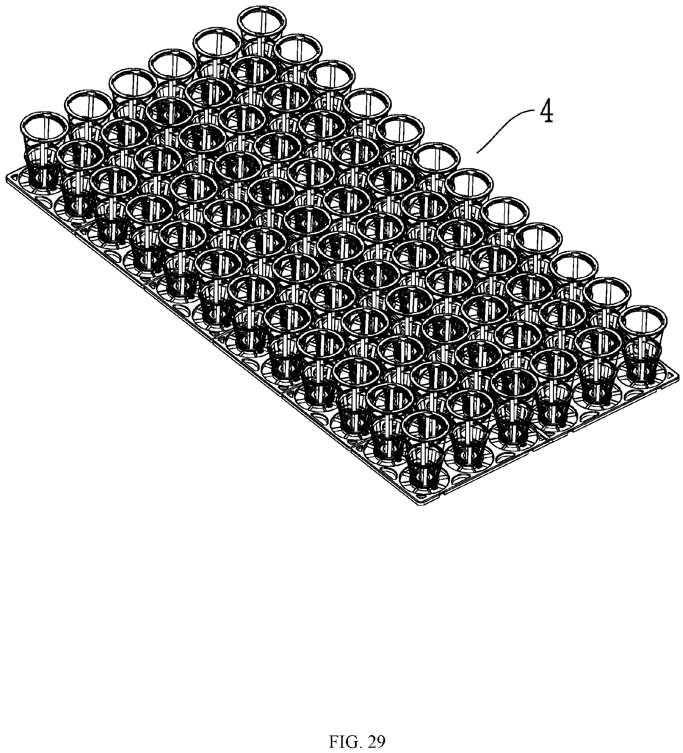

Referring to FIGS. 1-29, this embodiment provides a structure of an inverted-spring module, the spring module comprises a base 1 that is assemblable and spring members 2, and the term "assemblable" refers to the base 1 being configured to be assembled to another base 1 and the base 1 being configured to be assembled to the spring members 2.

The base 1 is used to form a bottom assembly of a spring net 4 to form a support of the base 1 for the spring members 2. The base 1 comprises position-limiting cavities 3 (i.e., position-limiting cavity bodies 3), the position-limiting cavities 3 comprises cavity bodies 31, and the cavity bodies 31 are used for assembling to the spring members 2. The base 1 is a plate-type structure (i.e., a structure with a uniform thickness), and the position-limiting cavities 3 protrude upward from the base 1 by a certain height.

The spring members 2 are tapered spring members and are divided into large ends and small ends due to tapered shapes. The spring members 2 comprise tapered spring sleeves 21 and tapered springs 22, and the tapered springs 22 are assembled inside the tapered spring sleeves 21. A middle portion of a spring member 2 comprises a first tapered cavity, the first tapered cavity is used to allow another spring member 2 to be stacked therein, enabling multiple of the spring members 2 to be stacked, and multiple of bases 1 and the position-limiting cavities 3 can also be stacked.

The spring members 2 are assembled inverted into the position-limiting cavities 3 using the small ends of the tapered shapes, hence, the position-limiting cavities 3 are designed as inverted tapered structures, and the cavity bodies 31 are tapered holes. Inverted assembly structures of the spring members 2 and the position-limiting cavities 3 are as follows: second insertion pins 311 are disposed on inner sides of the cavity bodies 31 of the position-limiting cavities 3, and the small ends of the tapered shapes of the spring members 2 comprise second insertion holes 23; and the second insertion pins 311 are inserted into the second insertion holes 23 to form an assembly. The second insertion pins 311 are inserted into the second insertion holes 23 to form detachable connection members between the cavity bodies 31 and the spring members 2.

As the position-limiting cavities 3 are disposed on the base 1 and the spring members 2 are assembled by the position-limiting cavities 3, a height of the position-limiting cavities 3 is set to no more than 1/3 of an overall height of the spring members 2 to enhance a support of the base 1 for the spring members 2, preferably, when the spring members 2 are assembled inverted within the position-limiting cavities 3, the height of the position-limiting cavities 3 is limited to be 1/3 of the height of the spring members 2.

A function of the position-limiting cavities 3 is as follows: first, the spring members 2 are restricted by the height of the position-limiting cavities 3 to enhance an assembly stability between the spring members 2 and the base 1, and the spring members 2 will not be detached from the base 1 even when rebounding after being subjected to a load, thereby preventing bottoms of the spring members 2 from a loose connection. Second, the position-limiting cavities 3 provide the cavity bodies 31 to enable the spring members 2 to be stably assembled to the base 1, increasing connection diversities between the base 1 and the spring members 2 while enhancing a support strength and a support stability of the base 1. Third, an arrangement of the height of the position-limiting cavities 3 restricts deformation amounts of the spring members 2 when the spring members 2 are downwardly deformed under a load, and when the spring members 2 are compressed downward to the height of the position-limiting cavities 3, structures defining the position-limiting cavities 3 prevent the spring members 2 from being easily compressed further, thereby increasing hardnesses of the spring members 2. Fourth, elastic structures can be installed on the position-limiting cavities 3, for example, springs 37 are assembled, softnesses and hardnesses of the spring members 2 can be adjusted to some extent through an elastic adjustment of the position-limiting cavities 3, achieving adjustable softness and hardness function of the spring members 2. Fifth, the position-limiting cavities 3 support and fix the spring members 2, enabling adjacent ones of the spring members 2 to remain independent, thereby allowing a spring member 2 to deform independently without interference from an adjacent spring member 2.

The position-limiting cavities 3 and the base 1 are configured such that portions of the position-limiting cavities 3 can be integrated with the base 1 and components of the portions are then assembled; alternatively, the position-limiting cavities 3 can be integrated with the base 1; and alternatively, the position-limiting cavities 3 can be connected to the base 1 via one or more third members, in which case the position-limiting cavities 3 and the base 1 can be connected using a detachable structure. Multiple of the position-limiting cavities 3 can be disposed on the base 1, allowing for an assembly of multiple of the spring members 2, the multiple of the position-limiting cavities 3 are arranged in an array, and at least one or two rows of the position-limiting cavities 3 are disposed on the base 1.

The spring module provided in this embodiment is used to assemble the spring net 4, and the spring net 4 is formed by assembling multiple of the bases 1 and multiple of the spring members 2; the bases 1 are assembled with each other, and the spring members 2 are assembled to the bases 1 to be assembled into the spring net 4. The spring net 4 can be assembled by first assembling the bases 1 and then sequentially placing the spring members 2 one by one, or by first assembling the spring members 2 on individual ones of the bases 1, then assembling the bases 1 into the spring net 4. The formed spring net 4 can be applied to furniture, mattresses, chairs, seats, sofas, and other equipment to provide elastic support, shock absorption, and cushioning, thereby enhancing comfort and durability.

### Embodiment 1, as shown in FIGS. 1-11.

The position-limiting cavities 3 and the base 1 are configured as follows: portions of the position-limiting cavities 3 are integrated with the base 1 and components of the portions are then assembled.

The position-limiting cavities 3 comprise fixed portions 32 and elastic portions 33, the fixed portions 32 are disposed on the base 1, the fixed portions 32 are integrated with the base 1, and the elastic portions 33 are configured as the springs 37.

The fixed portions 32 are configured as tapered sleeves, openings of the tapered sleeves face upward to form cavity bodies 31, and the cavity bodies 31 are tapered holes used for inverted installation of the spring members 2. The openings of the tapered sleeves face downward to form annular buckling grooves, the annular buckling grooves surround outer sides of cavity bodies 31, and the elastic portions 33 (i.e., the springs 37) are disposed inside the annular buckling grooves.

The spring members 2 (e.g., springs) can be fixed within the fixed portions 32 (i.e., the tapered sleeves), or the spring members 2 can be detachably installed relative to the fixed portions 32, and the spring members 2 can be selectively detached from or installed on the fixed portions 32, providing elastic support from the position-limiting cavities 3.

This embodiment provides the base 1, six of the fixed portions 32 are disposed on the base 1 in two rows and three columns, a corresponding one of the spring members 2 is disposed in each of the fixed portions 32, after assembling multiple bases 1 to a desired size of a base plate one by one, the spring members 2 are then invertedly installed on the bases 1 one by one to form the spring net 4.

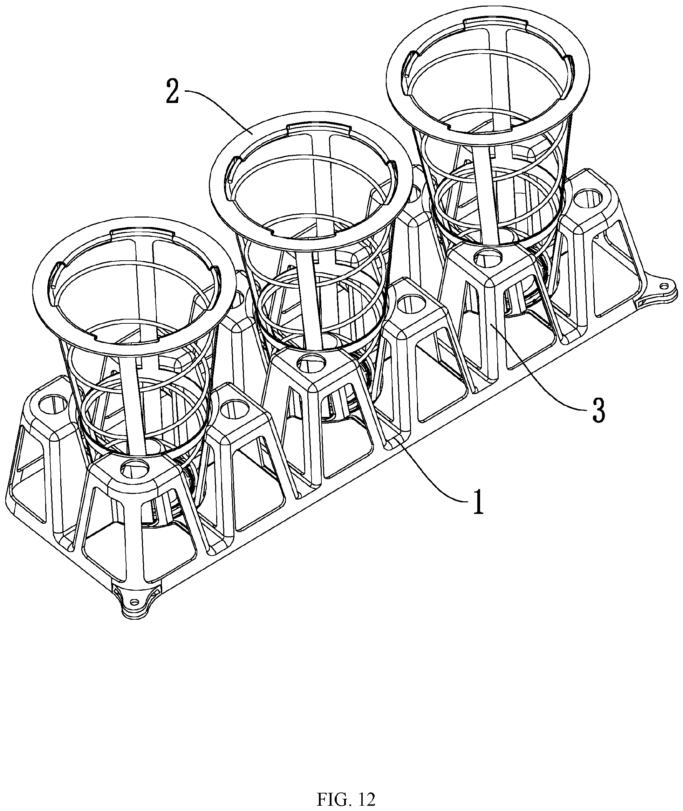

### Embodiment 2, as shown in FIGS. 12-19.

The position-limiting cavities 3 and the base 1 are configured as follows: the position-limiting cavities 3 are integrated with the base 1.

A position-limiting cavity 3 is divided into multiple position-limiting portions 34, the multiple position-limiting portions 34 are then fixed to the base 1, the multiple position-limiting portions 34 are arranged in a circumferential direction at equal intervals, and a cavity body 31 is enclosed by the multiple position-limiting portions 34. The cavity body 31 is enclosed by the position-limiting portions 34 extending inward and forming arc surfaces in a circumferential direction to form a tapered hole.

In this embodiment, the position-limiting cavity 3 is divided into four of the position-limiting portions 34, each of the position-limiting portions 34 is fixed to the base 1 via a support strip, the position-limiting portions 34 are hollow structures, and the position-limiting portions 34 can be elastically deformed. After a spring member 2 is invertedly disposed in the position-limiting cavity 3, the spring member 2 can achieve partial deformation cushion and partial stable support by utilizing the four of the position-limiting portions 34 that are independently arranged when being subjected to stress from different directions. The position-limiting portions 34 that are independently arranged reduce interference caused by elastic deformation of the spring members 2, enabling the position-limiting cavities 3 to provide excellent elastic support.

This embodiment provides the base 1, and three of the position-limiting cavities 3 are disposed on the base 1 in a single row. A first assembly method is as follows: the spring members 2 are invertedly installed in the three of the position-limiting cavities 3 of individual ones of bases 1 to form spring modules, and multiple of the spring modules are then assembled using assembly structures of the bases 1 one by one to form the spring net 4. A second assembly method is as follows: multiple bases 1 are assembled one by one to obtain a desired size of a base plate, then the spring members 2 are invertedly installed on the bases lone by one to form the spring net 4.

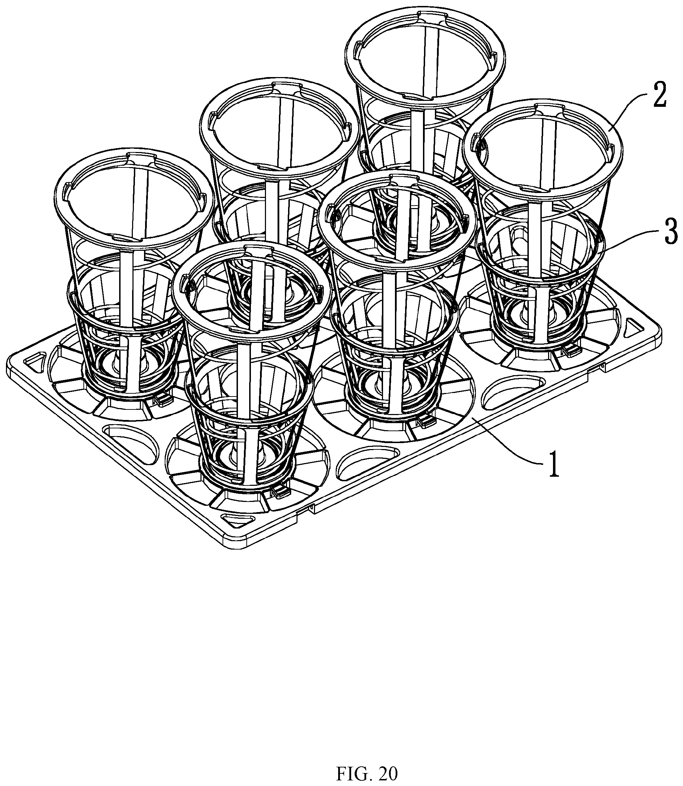

### Embodiment 3, as shown in FIGS. 20-29.

The position-limiting cavities 3 and the base 1 are configured as follows: the position-limiting cavities 3 are detachably connected to the base 1 via third members.

The position-limiting cavities 3 are configured as independent components, the position-limiting cavities 3 adopt alternative spring structures (i.e., smaller spring members) smaller than the spring members 2 (i.e., larger spring members), the position-limiting cavities 3 comprise springs 37 and elastic sleeves 38 (i.e., spring sleeves 38), the springs 37 are assembled inside the elastic sleeves 38, and both of the springs 37 and the elastic sleeves 38 are configured as tapered structures.

Middle portions of tapered shapes of the elastic sleeves 38 are cavity bodies 31 and form tapered holes for invertedly mounting the spring members 2, this can be understood to mean that the smaller spring members are sleeved over smaller ends of the larger spring members, smaller ends of the smaller spring members are mounted on the base 1, and the smaller spring members are configured as the position-limiting cavities 3.

The spring members 2 are invertedly installed within the position-limiting cavities 3, the small ends of the spring members 2 comprise second insertion holes 23, second insertion pins 311 are disposed on inner sides of the cavity bodies 31 of the position-limiting cavities 3, and the second insertion pins 311 are inserted into the second insertion holes 23. The position-limiting cavities 3 are invertedly installed on the base 1, small ends of the position-limiting cavities 3 comprise first insertion holes 36, first insertion pins 13 are disposed on the base 1, and the first insertion pins 13 are inserted into the first insertion holes 36.

In this embodiment, the position-limiting cavities 3 are independent components, and the position-limiting cavities 3 are installed on the base 1 through detachable structures formed by buckling structures or the third members.

The detachable structures are as follows: the base 1 comprises annular grooves 11 corresponding to the position-limiting cavities 3, the annular grooves 11 are configured to be connected to the small ends of the position-limiting cavities 3 by plugging, and the first insertion pins 13 are disposed on centers of the annular grooves 11. Two elastic buckling members 12 are disposed along an edge of an annular grooves 11, bottoms of the position-limiting cavities 3 comprise annular concave grooves 35, and when the position-limiting cavities 3 are downwardly pressed into the annular grooves 11, an annular concave groove 35 is buckled to the two elastic buckling members 12, thereby securing the position-limiting cavities 3 to the base 1.

An elastic buckling member 12 comprises a protruding portion 121 and a pressing portion 122, when a position-limiting cavity 3 is pressed downward, the protruding portion 121 is deformed to be buckled to the annular concave groove 35, and when the position-limiting cavity 3 needs to be detached, the pressing portion 122 is pressed downward to enable the protruding portion 121 to be deformed to be disengaged from the annular concave groove 35, thereby detaching the position-limiting cavity 3.

This embodiment provides the base 1, and six of the annular grooves 11 are disposed on the base 1 in two rows and three columns for assembling six of the position-limiting cavities 3. A first assembly method is as follows: the position-limiting cavities 3 are sequentially invertedly disposed on the six of the annular grooves 11 on individual ones of bases 1, the spring members 2 are then invertedly disposed on the position-limiting cavities 3 to form spring modules, and multiple spring modules are assembled one by one to form the spring net 4 using assembly structures of the bases 1. A second assembly method is as follows: multiple bases 1 are assembled one by one to a desired size of a base plate, and the position-limiting cavities 3 and the spring members 2 are then sequentially invertedly assembled to the bases 1 to form the spring net 4.

The present invention may be summarized as follows: The present disclosure provides a structure of an inverted-spring module, the spring module comprises a base having assemblability and spring members; the assemblability is that assemblability between bases and between the base and the spring members; the base comprises position-limiting cavities, the position-limiting cavities comprise cavity bodies, and shapes of the cavity bodies are adapted to ends of the spring members configured to be assembled to the base; and the cavity bodies are sleeved over the ends of the spring members configured to be assembled to the base; after the spring members are assembled, the position-limiting cavities limit heights of the spring members, heights of the position-limiting cavities are no more than 1/3 of the heights of the spring members, the spring members are inserted into the position-limiting cavities by setting the position-limiting cavities on the base, and the position-limiting cavities are used to enhance connection and support between the base and the spring members, increase a connection strength between the spring members and the base, and improve stability of the spring members.

The present invention may also be summarized as follows:
1. A structure of an inverted-spring module, characterized in that: the spring module comprises a base having assemblability and spring members; the assemblability is that assemblability between bases and between the base and the spring members; adjacent ones of the spring members form an independent arrangement, and the independent arrangement is that the spring members are not connected together;
   the base comprises position-limiting cavities, the position-limiting cavities comprise cavity bodies for accommodating the spring members, and shapes of the cavity bodies are adapted to ends of the spring members configured to be assembled to the base; and the cavity bodies and the spring members are connected via detachable connection members;
   after the spring members are assembled, the position-limiting cavities limit heights of the spring members, and heights of the position-limiting cavities are no more than 1/3 of the heights of the spring members; and
   the position-limiting cavities are partially or fully connected to the base to form detachable connections, the base has a plate-type structure, and the position-limiting cavities are structures protruding from an upper surface of the base.
2. The structure of the inverted-spring module according to item 1, characterized in that: the spring members are tapered spring members, a middle portion of a spring member comprises a first tapered cavity, and the first tapered cavity is used for stacking another spring member.
3. The structure of the inverted-spring module according to item 2, characterized in that: the spring members comprise tapered spring sleeves and tapered springs; and the tapered springs are assembled inside the tapered spring sleeves.
4. The structure of the inverted-spring module according to any one or more of items 1 to 3, characterized in that: the position-limiting cavities comprise fixed portions and elastic portions, and the fixed portions are fixed to the base; and
   the elastic portions are disposed inside the fixed portions and are configured to detach relative to the fixed portions.
5. The structure of the inverted-spring module according to item 4, characterized in that: the fixed portions are detachably fixed to the base or the fixed portions are integrated with the base.
6. The structure of the inverted-spring module according to item 4 and/or 5, characterized in that: openings of the fixed portions face upward to form the cavity bodies, the openings of the fixed portions face downward to form annular buckling grooves, and the elastic portions are disposed inside the annular buckling grooves.
7. The structure of the inverted-spring module according to any one or more of items 4 to 6, characterized in that: the elastic portions are springs.
8. The structure of the inverted-spring module according to any one or more of items 1 to 7, characterized in that: a position-limiting cavity comprises at least four position-limiting portions, and the at least four position-limiting portions are disposed at equal intervals along a circumferential direction; and
   a cavity body is enclosed by the at least four position-limiting portions.
9. The structure of the inverted-spring module according to any one or more of items 1 to 8, characterized in that: the position-limiting cavities are independent components, and the position-limiting cavities are detachably assembled to the base.
10. The structure of the inverted-spring module according to any one or more of items 1 to 9, wherein the position-limiting cavities are detachably connected to the base via buckling structures or third members.
11. The structure of the inverted-spring module according to any one or more of items 1 to 10, characterized in that: the base comprises annular grooves, at least two elastic buckling members are disposed along an edge an annular groove, and bottoms of the position-limiting cavities comprise annular concave grooves; and
   the position-limiting cavities are downwardly pressed into the annular grooves, and an annular concave groove is buckled to the at least two elastic buckling members.
12. The structure of the inverted-spring module according to item 11, characterized in that: an elastic buckling member comprises a protruding portion and a pressing portion, the protruding portion is buckled in the annular concave groove, and the pressing portion is pressed downward to enable the protruding portion to be separated from the annular concave groove, thereby removing a position-limiting cavity.
13. The structure of the inverted-spring module according to any one or more of items 1 to 12, characterized in that: first insertion pins are disposed on the base, the bottoms of the position-limiting cavities comprise first insertion holes, and the first insertion pins are disposed in the first insertion holes.
14. The structure of the inverted-spring module according to any one or more of items 1 to 13, characterized in that: the position-limiting cavities comprise springs and spring sleeves, and the springs are assembled inside the spring sleeves.
15. The structure of the inverted-spring module according to any one or more of items 1 to 14, characterized in that: the base is stackable.
16. The structure of the inverted-spring module according to any one or more of items 1 to 15, characterized in that: the position-limiting cavities are stackable.
17. The structure of the inverted-spring module according to any one or more of items 1 to 16, characterized in that: the base comprises multiple of the position-limiting cavities.
18. The structure of the inverted-spring module according to any one or more of items 1 to 17, characterized in that: the position-limiting cavities are arranged in an array; and the position-limiting cavities are disposed on the base in at least one row.
19. The structure of the inverted-spring module according to any one or more of items 1 to 18, characterized in that: second insertion pins are disposed on inner sides of the cavity bodies of the position-limiting cavities, and ends of the spring members used for assembling to the base comprise second insertion holes; and the second insertion pins are disposed in the second insertion holes to form the detachable connection members.
20. A spring net, characterized in that, it comprises the structure of the inverted-spring module according to any one or more of items 1-19, and the spring net is assembled by the bases and the spring members; and
   the bases are assembled together and the spring members are assembled to the bases to define the spring net.
21. The spring net according to item 20, characterized in that: the spring members are tapered spring members, the position-limiting cavities are tapered cavities, and cavity bodies of the position-limiting cavities are configured to be tapered holes; and
   small ends of tapered shapes of the tapered spring members are assembled inside the tapered holes.

The aforementioned description is merely specific implementation methods of the present disclosure, however, the design and the concept of the present disclosure are not limited thereto, and non-substantive modifications of the present disclosure fall within the protection scope of the present disclosure provided that they are made based on the concept within the technical scope disclosed by the present disclosure by any person familiar with skill in the art.

## Claims

1. A structure of an inverted-spring module, **characterized in that**: the spring module comprises a base having assemblability and spring members; the assemblability is that assemblability between bases and between the base and the spring members; adjacent ones of the spring members form an independent arrangement, and the independent arrangement is that the spring members are not connected together;
the base comprises position-limiting cavities, the position-limiting cavities comprise cavity bodies for accommodating the spring members, and shapes of the cavity bodies are adapted to ends of the spring members configured to be assembled to the base; and the cavity bodies and the spring members are connected via detachable connection members;
after the spring members are assembled, the position-limiting cavities limit heights of the spring members, and heights of the position-limiting cavities are no more than 1/3 of the heights of the spring members; and
the position-limiting cavities are partially or fully connected to the base to form detachable connections, the base has a plate-type structure, and the position-limiting cavities are structures protruding from an upper surface of the base.

2. The structure of the inverted-spring module according to claim 1, **characterized in that**: the spring members are tapered spring members, a middle portion of a spring member comprises a first tapered cavity, and the first tapered cavity is used for stacking another spring member, wherein preferably:
the spring members comprise tapered spring sleeves and tapered springs; and the tapered springs are assembled inside the tapered spring sleeves.

3. The structure of the inverted-spring module according to claim 1 and/or 2, **characterized in that**: the position-limiting cavities comprise fixed portions and elastic portions, and the fixed portions are fixed to the base; and
the elastic portions are disposed inside the fixed portions and are configured to detach relative to the fixed portions, wherein preferably:
the fixed portions are detachably fixed to the base or the fixed portions are integrated with the base.

4. The structure of the inverted-spring module according to claim 3, **characterized in that**: openings of the fixed portions face upward to form the cavity bodies, the openings of the fixed portions face downward to form annular buckling grooves, and the elastic portions are disposed inside the annular buckling grooves, wherein preferably:
the elastic portions are springs.

5. The structure of the inverted-spring module according to any one or more of claims 1 to 4, **characterized in that**: a position-limiting cavity comprises at least four position-limiting portions, and the at least four position-limiting portions are disposed at equal intervals along a circumferential direction; and
a cavity body is enclosed by the at least four position-limiting portions.

6. The structure of the inverted-spring module according to any one or more of claims 1 to 5, **characterized in that**: the position-limiting cavities are independent components, and the position-limiting cavities are detachably assembled to the base.

7. The structure of the inverted-spring module according to any one or more of claims 1 to 6, wherein the position-limiting cavities are detachably connected to the base via buckling structures or third members.

8. The structure of the inverted-spring module according to any one or more of claims 1 to 7, **characterized in that**: the base comprises annular grooves, at least two elastic buckling members are disposed along an edge an annular groove, and bottoms of the position-limiting cavities comprise annular concave grooves; and
the position-limiting cavities are downwardly pressed into the annular grooves, and an annular concave groove is buckled to the at least two elastic buckling members, wherein preferably:
an elastic buckling member comprises a protruding portion and a pressing portion, the protruding portion is buckled in the annular concave groove, and the pressing portion is pressed downward to enable the protruding portion to be separated from the annular concave groove, thereby removing a position-limiting cavity.

9. The structure of the inverted-spring module according to any one or more of claims 1 to 8, **characterized in that**: first insertion pins are disposed on the base, the bottoms of the position-limiting cavities comprise first insertion holes, and the first insertion pins are disposed in the first insertion holes.

10. The structure of the inverted-spring module according to any one or more of claims 1 to 9, **characterized in that**: the position-limiting cavities comprise springs and spring sleeves, and the springs are assembled inside the spring sleeves.

11. The structure of the inverted-spring module according to any one or more of claims 1 to 10, **characterized in that**: the base is stackable.

12. The structure of the inverted-spring module according to any one or more of claims 1 to 11, **characterized in that**: the position-limiting cavities are stackable.

13. The structure of the inverted-spring module according to any one or more of claims 1 to 12, **characterized in that**: the position-limiting cavities are arranged in an array; and the position-limiting cavities are disposed on the base in at least one row.

14. The structure of the inverted-spring module according to any one or more of claims 1 to 13, **characterized in that**: second insertion pins are disposed on inner sides of the cavity bodies of the position-limiting cavities, and ends of the spring members used for assembling to the base comprise second insertion holes; and the second insertion pins are disposed in the second insertion holes to form the detachable connection members.

15. A spring net, **characterized in that**, it comprises the structure of the inverted-spring module according to any one or more of claims 1-14, and the spring net is assembled by the bases and the spring members; and
the bases are assembled together and the spring members are assembled to the bases to define the spring net, wherein preferably:
the spring members are tapered spring members, the position-limiting cavities are tapered cavities, and cavity bodies of the position-limiting cavities are configured to be tapered holes; and
small ends of tapered shapes of the tapered spring members are assembled inside the tapered holes.
